(19) Europäisches Patentamt
European Patent Office
Office européen des brevets

(11) Veröffentlichungsnummer: **0 033 774**
**A2**

(12) # EUROPÄISCHE PATENTANMELDUNG

(21) Anmeldenummer: **80107650.6**

(22) Anmeldetag: **05.12.80**

(51) Int. Cl.³: **C 08 C 19/28**, C 08 L 21/00

(30) Priorität: **02.02.80 DE 3003893**

(43) Veröffentlichungstag der Anmeldung: **19.08.81**
**Patentblatt 81/33**

(84) Benannte Vertragsstaaten: **AT BE CH FR GB IT LI NL SE**

(71) Anmelder: **CHEMISCHE WERKE HÜLS AG, Postfach 1320, D-4370 Marl 1 (DE)**

(72) Erfinder: **Kampf, Wolfgang, Dr., Im Wienäckern 60 b, D-4358 Haltern (DE)**
Erfinder: **Streck, Roland, Dr., Leverkusener Strasse 12, D-4370 Marl (DE)**
Erfinder: **Haag, Horst-Guenter, Dr., Wellerfeldweg 219, D-4370 Marl (DE)**

(54) **Reaktive Silylgruppen tragende Homo- oder Copolymere von 1,3-Dienen, Verfahren zu ihrer Herstellung sowie deren Verwendung.**

(57) Reaktive Silylgruppen tragende Homo- oder Copolymere von 1,3-Dienen, die dadurch gekennzeichnet sind, daß sie

a) 0,4 bis 12 Gewichtsprozent gebundenes Silicium enthalten und

b) durch Umsetzung eines mehr als 1% seiner aliphatischen Doppelbindungen in Konjugation enthaltenden 1,3-Dien-Homo- oder Copolymeren vom Molekulargewicht ($\bar{M}n$) 400 bis 6000 mit einer Siliciumverbindung der allgemeinen Formel I

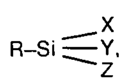

in der R ein ungesättigter aliphatischer Kohlenwasserstoffrest mit 2 bis 20 Kohlenstoffatomen und X ein hydrolysierbarer Rest sind, Y und Z gleich X, Wasserstoff und ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 190 bis 300° C erhalten werden.

Sie dienen vornehmlich als Haftvermittler bei der Herstellung von Mischungen aus Polymeren, mineralischen Füllstoffen und gegebenenfalls weiteren Zusatzstoffen.

EP 0 033 774 A2

Reaktive Silylgruppen tragende Homo- oder Copolymere von 1,3-Dienen, Verfahren zu ihrer Herstellung sowie deren Verwendung

Die Erfindung bezieht sich auf reaktive Silylgruppen tragende Homo- oder Copolymere von 1,3-Dienen, auf ein Verfahren zu ihrer Herstellung sowie auf ihre Verwendung als Haftvermittler bei der Herstellung von Mischungen aus Polymeren, mineralischen Füllstoffen und gegebenenfalls weiteren Zusatzstoffen.

Es ist bekannt, Ruße verschiedener Spezifikationen als Komponente von Kautschukmischungen zu verwenden. Des weiteren ist es bekannt, daß die Zugabe von Ruß weniger zum Zwecke der Verbilligung der aus dieser Mischung hergestellten Vulkanisate als vielmehr zur Anhebung des gesamten Niveaus der anwendungstechnischen Eigenschaften erfolgte. Hier sind vor allem Reißfestigkeit, Modul, Härte, Weiterreiß- und Abriebwiderstand zu nennen. Ruß ist also als ein sogenannter aktiver oder verstärkender Füllstoff zu bezeichnen.

Aus verschiedenen Gründen sind aber einer Verwendung von Ruß in Kautschukmischungen Grenzen gesetzt. Einerseits lassen sich mit ihm nur schwarze, jedenfalls keine farbigen oder weißen Mischungen herstellen. Andererseits sind gute Ruße gegenüber den wohlfeilen mineralischen Füllstoffen, wie Kieselsäure ($SiO_2$), Kaolin, Aluminiumhydroxid und Glas, so teuer geworden, daß ihr Ersatz durch die beispielhaft genannten hellen Füllstoffe in zunehmendem Maße angestrebt wird. Nicht zuletzt auch deswegen, weil durch eine solche Substitution der Anteil von Komponenten auf der Basis des versorgungskrisenabhängigen Rohöls verringert wird. Darüber hinaus ist für die Optimierung bestimmter Eigenschaften, wie z. B. die Kerbzähigkeit, der Einsatz hochaktiver Kieselsäuren von großem Vorteil.

Solche hellen mineralischen Füllstoffe sind bisher zwar schon verwendet worden, jedoch vorwiegend unter dem Gesichtspunkt der reinen Verbilligung, wobei man zunächst beträchtliche Einbußen der anwendungstechnisch wertvollen Eigenschaften, wie z. B. Wärmeabbau, Elastizität und Druckverformungsrest, in Kauf nehmen mußte. Ähnliche Probleme bestehen auch bei der Füllung bzw. Verstärkung von anderen polymeren Werkstoffen, beispielsweise Polyolefinen oder ungesättigten Polyesterharzen, mit mineralischen Füllstoffen.

Es ist bekannt, daß man diese Nachteile wenigstens teilweise durch die Verwendung sogenannter Haftvermittler beseitigen kann. Dabei handelt es sich - allgemein gesagt - um Substanzen, die sowohl zum Polymeren als auch zum Füllstoff eine gewisse Affinität besitzen, welche sich vorzugsweise in der Fähigkeit zu einer chemischen Reaktion mit den beiden Substraten äußert.

Als Haftvermittler besonders bekannt geworden ist die Gruppe der organofunktionellen Silane. Sie besitzen die allgemeine Formel $R\text{-}SiX_3$, wobei X meist eine Alkoxigruppe, seltener ein Halogenatom bedeutet und der organische Rest R eine durch eine funktionelle Gruppe substituierte Alkyl- oder Arylgruppe ist. Diese Verbindungen liefern zwar befriedigende Ergebnisse hinsichtlich der Eigenschaften mit ihrer Hilfe hergestellter Polymer-Füllstoff-Kombinationen, weisen aber einige Nachteile in der Anwendung auf. So sind verschiedene Silane in vulkanisierbaren Kautschuk-Füllstoff-Mischungen jeweils nur für eine bestimmte Art der Vernetzungstechnik ~~optimal~~ anwendbar. Auch gibt es z. B. bei den Mercaptosilanen Geruchsbelästigungen sowie eine Neigung der damit versetzten Mischungen zu vorzeitiger Vulkanisation (Scorch). Darüber hinaus sind organofunktionelle Silane im Vergleich zu den übrigen Komponenten der Gummimischung außerordentlich teuer und im allgemeinen von nicht zu vernachlässigender Toxizität hinsichtlich Inhalation und Hautkontakt.

Es hat weiterhin nicht an Versuchen gefehlt, solche Haftvermittler mit ähnlicher Wirkung auch auf polymerer Basis zu synthetisieren. So ist z. B. bekannt, daß Naturkautschuk und Styrol-Butadien-Kautschuk (SBR) durch Erhitzen mit Trichlorsilan auf ca. 300 °C hydrosiliert werden können (US-PS 2 475 122) und solche Reaktionsprodukte gut an Glasplatten haften (US-PS 2 557 778).

Die photochemisch bewirkte Hydrosilierung eines durch anionische Polymerisation erhaltenen flüssigen Polybutadiens wird in der US-PS 2 952 576 beschrieben, deren Gegenstand mit diesem Material beschichtete Glasfasern zur Verstärkung von ungesättigten Polyesterharzen sind. Die Mikrostruktur des verwendeten flüssigen Polybutadiens wird zwar nicht erwähnt; aus den Angaben über seine Herstellung mittels Natriumsuspension läßt sich aber durch Vergleich mit Literaturangaben schließen, daß es etwa 60 bis 70 % Vinyl-Gruppen sowie 30 bis 20 % trans-Vinylen- sowie nur ca. 10 % cis-Vinylen-Gruppen enthält.

Die Katalyse der Hydrosilierung von Polybutadienen durch Platin-Verbindungen wird in den DE-OSS 16 20 934 und 17 20 527 als Zwischenstufe bei der Herstellung von Schaumstabilisatoren bzw. Laminierharzen beschrieben. Diesen Offenlegungsschriften ist keine Lehre zur Anwendung der Reaktionsprodukte auf Kautschuk-Füllstoff-Mischungen zu entnehmen. Zudem handelt es sich wie oben in beiden Fällen um Produkte mit hohem Gehalt an Vinyl-Gruppen, während die restlichen Doppelbindungen überwiegend aus trans-Vinylen-Gruppen bestehen. Polybutadiene dieser Mikrostruktur besitzen selbst bei relativ niedrigen Molekulargewichten eine sehr hohe Viskosität bei Raumtemperatur; ihre Handhabung, Dosierung und Einmischung wird durch diese Konsistenz außerordentlich erschwert. Die gleiche Einschränkung gilt für ihre hydrosilierten Derivate.

Die konventionelle Pt-Katalyse der Hydrosilierung wird

auch in der US-PS 3 759 869 beschrieben, in der Polymere beansprucht werden, welche Molekulargewichte zwischen 500 und 50 000 besitzen und zu wenigstens 25 Gewichtsprozent die Struktur

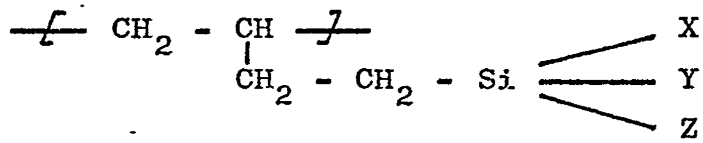

enthalten.

Dies entspricht im Falle eines reinen Polybutadiens als Basispolymer der Anbringung einer reaktiven Silylgruppe $-SiX_3$ an etwa jeder zehnten Monomereinheit. Aus den Beispielen ist nur die Hydrosilierung eines Polybutadiens mit einem durchschnittlichen Molekulargewicht von 1 000 und einem Vinyl-Gruppen-Gehalt von 90 %, bezogen auf gesamte Doppelbindungen, und zwar unter praktisch 100 %iger Absättigung sämtlicher vorhandenen Vinyl-Gruppen zu entnehmen. Mischungen solcher Produkte bzw. ihrer durch Folgereaktionen erhaltenen Derivate mit niedermolekularem Polypropylen (Molekulargewicht 5 000) bzw. EPM-Kautschuk werden lediglich erwähnt, ohne daß etwas über ihre Wirksamkeit ausgesagt wird. Zudem eignen sich solche weitestgehend abgesättigten Polybutadien-Derivate bzw. damit ausgerüstete Füllstoffe - allein aufgrund des Mangels an Doppelbindungen - nur schlecht für den Verbund mit einem durch Schwefel- oder Peroxid-Vulkanisation entstehenden Polymernetzwerk.

Die DE-OS 23 43 108 beansprucht die Hydrosilierung von Kautschukpolymeren, welche wenigstens vorzugsweise 5 bis 30 Gewichtsprozent Vinyl-Gruppen enthalten, und ihre Verwendung als Kupplungsmittel für die Vulkanisation eines ein kieselsäurehaltiges Pigment enthaltenden vulkanisierbaren Kautschuks. Es handelt sich um Produkte, die wegen ihres hohen Molekulargewichts nur in Lösung anwendbar sind.

Demgegenüber werden in der DE-AS 26 35 601 Hydrosilierungsprodukte spezieller Polybutadienöle mit Molekulargewichten von 400 bis 6 000 beschrieben, die dank ihrer Mikrostruktur (10 bis 60 % Vinyl-Gruppen, 1 bis 15 % trans-Vinylen- und 25 bis 85 % cis-Vinylen-Gruppen) besonders niedrige Viskositäten aufweisen und daher gut unverdünnt gehandhabt werden können. Den Hydrosilierungsprodukten haftet jedoch der Nachteil an, daß der bei ihrer Herstellung verwendete Platinkatalysator weitgehend im Produkt verbleibt und damit verloren geht.

Bekannt ist auch die Umsetzung von lithium-terminierten "lebenden Polymeren" mit einem Überschuß eines Tetrahalogeno- bzw. Tetraalkoxisilans gemäß dem Verfahren der US-PS 3 244 664. Dieser Überschuß, der zur Vermeidung von Kupplungs- bzw. Vernetzungsreaktionen angewandt werden muß, läßt sich praktisch nicht abtrennen und geht somit bei der weiteren Aufarbeitung verloren.

Die Addition von Sulfhydrylgruppen eines Mercaptosilans - z. B. des $\gamma$-Mercaptopropyltriethoxisilans - an Doppelbindungen eines ungesättigten Polymeren wurde mehrmals beschrieben (US-PS 3 440 302, DE-OSS 23 33 566 und 23 33 567), hat aber den Nachteil eines sehr teuren und übelriechenden Einsatzmaterials.

Weiterhin sind Verfahren bekannt, welche durch Verwendung von Silylgruppen haltigen Peroxi- (DE-OSS 21 52 295 und 21 52 286) bzw. Azo-Verbindungen (J. Appl. Pol. Sci 18, 3259 (1974)) als Initiatoren oder von Silylgruppen haltigen Disulfiden (DE-OS 21 42 596) als Kettenüberträgern der radikalischen Polymerisation zu Polymeren mit reaktiven Silylgruppen führen. Auch hier trifft zu, daß die zur Einführung der Silylgruppen benutzten Hilfsstoffe schwierig zugänglich, sehr teuer und meist im Handel überhaupt nicht erhältlich sind. Außerdem lassen sich auf diesem Wege maximal zwei reaktive Silylgruppen - und zwar an den Enden der Polymerkette - einführen. Produkte mit höherem Siliciumgehalt, die zur Erzielung bestimmter Effekte, z.

0033774
O.Z. 3620

B. erhöhter Selbstvernetzung, erwünscht sein können, können also auf diesem Wege nicht hergestellt werden.

Silylgruppen haltige Polyalkenamere können zwar leicht durch Verwendung von Silylolefinen (DE-PS 21 57 405) bzw. Silylcycloolefinen (DE-AS 23 14 543) als Regler bzw. (Co-) Monomere bei der ringöffnenden Polymerisation von Cycloolefinen hergestellt werden; für die allgemeine Anwendung begrenzend ist jedoch auch hier die wirtschaftliche Verfügbarkeit der Reaktanten.

Aufgabe der vorliegenden Erfindung war es daher, Produkte zu entwickeln, die auf der Basis leicht zugänglicher und wohlfeiler Ausgangsmaterialien ohne Verlust an wertvollen Edelmetallen, unter vereinfachten Aufarbeitungsbedingungen und mit in weiten Grenzen variierbarem Gehalt an reaktiven Silylgruppen hergestellt werden können.

Diese Aufgabe wurde erfindungsgemäß gelöst durch reaktive Silylgruppen tragende Homo- oder Copolymere von 1,3-Dienen mit 0,4 bis 12 Gewichtsprozent gebundenem Silicium, die erhalten werden durch Umsetzung eines konjugierte Doppelbindungen enthaltenden 1,3-Dien-Homo- oder Copolymeren vom Molekulargewicht ($\overline{M}n$) 400 bis 6 000 mit einer Siliciumverbindung der allgemeinen Formel I

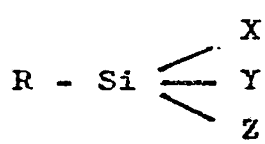 ,

in der R ein ungesättigter aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls ein substituierter Phenylrest sein können, bei einer Temperatur von 190 bis 300 °C, gegebenenfalls in Gegenwart von

die radikalische Polymerisation der ungesättigten Silane unterdrückenden Stabilisatoren, wie beispielsweise tert.-Butylbrenzcatechin oder Hydrochinon.

Ausgangsprodukte für die erfindungsgemäßen Silylgruppen tragenden Verbindungen sind somit einmal konjugierte Doppelbindungen enthaltende 1,3-Dien-Homo- oder Copolymeren mit Molekulargewichten ($\overline{M}n$) von 400 bis 6 000 und zum anderen die ungesättigten Siliciumverbindungen der allgemeinen Formel I.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander, Copolymerisate dieser 1,3-Diene mit vinylsubstituierten aromatischen Verbindungen, wie z. B. Styrol, $\alpha$-Methylstyrol, Vinyltoluol und Divinylbenzol, sowie Reaktionsprodukte aus konjugierten 1,3-Dienen und aromatischen Kohlenwasserstoffen gemäß dem Verfahren der JP-OS 49-32985 und der deutschen Patentanmeldungen P 28 48 804.2 und P 30 00 708.0, sofern ihre aliphatischen Doppelbindungen zu Konjuenstrukturen isomerisiert werden können. Der Gehalt an vinylsubstituierten aromatischen Verbindungen in den Copolymerisaten soll 50 Molprozent nicht überschreiten. Bevorzugt werden bei dem erfindungsgemäßen Verfahren Polybutadiene mit Molekulargewichten ($\overline{M}n$) von 600 bis 2 000 eingesetzt. Die Mikrostruktur der Diene in den Homo- und Copolymeren bzw. in den genannten Reaktionsprodukten ist im allgemeinen nicht kritisch, jedoch ist es vorteilhaft, wenn mindestens 20 % der Doppelbindungen cis-1,4-Struktur besitzen. Im allgemeinen werden Homo- oder Copolymere mit folgender Verteilung der Doppelbindungen eingesetzt:

0 bis 60 % Vinylgruppen,
1 bis 25 % trans-Vinylen-Gruppen,
25 bis 85 % cis-Vinylen-Gruppen.

Solche Produkte können nach vielen bekannten Verfahren des Standes der Technik (z. B. DE-PS 11 86 631, DE-AS 12 12 302, DE-PS 12 92 853, DE-OS 23 61 782 und DE-OS 23 42 885) hergestellt werden.

Da ihr Gehalt an konjugierten Doppelbindungen - egal nach welchem Verfahren und mit welchem Katalysator sie hergestellt wurden - im allgemeinen sehr gering ist ( < 1 %), müssen sie vor der Umsetzung mit den ungesättigten Siliciumverbindungen der allgemeinen Formel I mit einem sogenannten Isomerisierungskatalysator behandelt werden. Dies kann z. B. nach einem der noch nicht zum Stand der Technik gehörenden Verfahren der deutschen Patentanmeldungen P 29 24 548.5, P 29 24 577.0 und P 29 24 598.5 erfolgen. Gemäß diesen Verfahren werden die niedermolekularen 1,3-Dien-Homo- oder Copolymeren mit Ausnahme der Reaktionsprodukte aus konjugierten 1,3-Dienen und aromatischen Kohlenwasserstoffen, gegebenenfalls in Gegenwart eines Lösemittels, bei Temperaturen von 0 bis 250 °C mit einem speziellen Isomerisierungskatalysator behandelt. Die oben ausgeklammerten Reaktionsprodukte können z. B. mit Hilfe eines Katalysators isomerisiert werden, der entweder ein Alkalialkoholat, das gegebenenfalls zusätzlich eine Verbindung aus der Gruppe bestehend aus Dimethylsulfoxid, Dimethylformamid und N-methylpyrrolidon enthält, oder ein Umsetzungsprodukt und/oder Gemisch aus einem Alkalimetall und/oder einem Alkalihydrid und/oder einer alkalimetall- und/oder magnesiumorganischen Verbindung und Ammoniak und/oder einem Amin und/oder Hexamethylphosphorsäuretriamid ist.

Mit den in den deutschen Patentanmeldungen P 29 24 548.5, P 29 24 577.0 und P 29 24 598.5 genannten Katalysatoren läßt sich in den 1,3-Dien-Homo- und Copolymeren ein Anteil an konjugierten Doppelbindungen, bezogen auf die Gesamtheit der vorhandenen aliphatischen Doppelbindungen, von 1 bis 70 %, vorzugsweise von 2 bis 50 %, und besonders bevorzugt von 5 bis 35 %, einstellen.

Die UV-spektroskopisch ermittelten Konjuengehalte setzen sich im wesentlichen aus konjugierten Dienstrukturen (Absorptionsbande bei ca. 230 nm), daneben auch in geringem Maße aus konjugierten Tri- (Absorptionsbande bei ca. 270 nm) und Tetraenstrukturen (Absorptionsbande bei ca. 320 nm) zusammen. Sie sind im Falle der Polybutadiene als Gewichtsprozente, berechnet für $C_8H_{14}$ (konjugierte Diene), $C_8H_{12}$ (konjugierte Triene) und $C_8H_{10}$ (konjugierte Tetraene) angegeben.

In den Reaktionsprodukten können mit den genannten Katalysatorsystemen bis zu 100 % der konjugierten Doppelbindungen isomerisiert werden.

Erfindungsgemäß werden die reaktiven Silylgruppen durch Umsetzung mit einer Siliciumverbindung der allgemeinen Formel I in das 1,3-Dien-Homo- oder Copolymere eingeführt. In dieser allgemeinen Formel $R - Si \begin{matrix} X \\ Y \\ Z \end{matrix}$ steht R für einen ungesättigten aliphatischen Kohlenwasserstoffrest mit 2 bis 20, vorzugsweise 2 bis 6 Kohlenstoffatomen, und X für einen hydrolysierbaren Rest, wie z. B. Halogen, vorzugsweise Chlor und Brom, Alkoxyl, vorzugsweise mit bis zu 6 Kohlenstoffatomen, Aroxyl, vorzugsweise mit 6 bis 12 Kohlenstoffatomen, Carboxylat, vorzugsweise mit bis zu 8 Kohlenstoffatomen, Ketoximat, vorzugsweise mit bis zu 6 Kohlenstoffatomen in der Ketogruppe, oder Amid, mit vorzugsweise bis zu 12 Kohlenstoffatomen. Y und Z können gleich X sein, daneben aber auch Wasserstoff, ein Alkylrest mit 1 bis 8 Kohlenstoffatomen, ein Cycloalkylrest mit 5 bis 12 Kohlenstoffatomen oder ein gegebenenfalls substituierter Phenylrest.

Typische Vertreter der ungesättigten Organosilane sind beispielsweise Vinyltrichlorsilan, Vinyltrimethoxisilan, Vinyltriethoxisilan, Vinyltris(methoxiethoxi)silan, Vinylmethyldimethoxisilan, Vinyldimethylchlorsilan, Allylmethylbutylchlorsilan, Allylethyldibromsilan, Allyldimethylacetoxisilan, Allyltriisopropoxisilan, Allylphenyldiphenoxisilan, Methallylbutylchlorbromsilan,

Crotylmethylpropyljodsilan, ω-Undecenylfluorchlorbromsilan, Octadecen-(9)-yl-triacetoxisilan und Vinyl-dimethylketosimatomethoxi-chlor-silan.

Bevorzugt sind Vinyl- und Allylsilane mit Halogenatomen oder Alkoxigruppen als abhydrolysierbaren Resten X, z. B. Vinyltrichlorsilan, Vinylmethyldichlorsilan, Vinylmethylethylchlorsilan, Vinyltrimethoxisilan, Vinyltriethoxisilan, Vinylmethyldibutoxisilan, Allyltribromsilan und Allylethylmethoxi-propoxi-silan.

Unter den ungesättigten Halogensilanen sind wiederum die mit Chlor als Halogen bevorzugt, so daß beispielsweise Vinyltrichlorsilan, Vinylmethyldichlorsilan, Vinyldimethylchlorsilan und Allyltrichlorsilan besonders bevorzugte Vertreter darstellen.

Die mögliche Umwandlung der mit diesen Verbindungen eingebrachten Chlorsilyl-Gruppen in andere reaktive Silyl-Gruppen kann beispielsweise im Laufe der Aufarbeitung z. B. durch Zugabe von vorzugsweise Alkoholen, Trialkylorthoformiaten, Epoxiden, Natriumacetat usw. nach bekannten Reaktionen des Standes der Technik erfolgen. Eine derartige Umwandlung kann allerdings unterbleiben, wenn das flüssige Hydrosilierungsprodukt vorteilhafterweise direkt auf einen mineralischen Füllstoff aufgebracht wird und man für Beseitigung der bei dieser Reaktion freiwerdenden Salzsäure sorgt, die in diesem Falle als trockenes Chlorwasserstoffgas und nicht als Lösung in Alkohol oder Alkylchlorid anfällt, also weiter genutzt werden kann.

Aus der Verbindungsklasse der ungesättigten Alkoxisilane sind diejenigen mit Alkoxiresten von 1 bis 4 Kohlenstoffatomen besonders vorteilhaft, so daß Vinyltrimethoxisilan, Vinyltriethoxisilan, Vinyl-methoxi-diethoxi-silan, Vinylmethylmethoxi-propoxi-silan, Allylpropylpropoxibutoxisilan als bevorzugte Vertreter gelten. Ganz besonders bevorzugt ist die Verwendung von Vinyltrimethoxisilan, Vinyltriethoxisilan, Vinylmethyldimethoxisilan und Vinylmethyldiethoxisilan.

Bei der Verwendung dieser ungesättigten Alkoxisilane ergibt sich der Vorteil, daß eine Aufarbeitung der Anlagerungsprodukte praktisch unterbleiben oder sich auf das Abdestillieren allenfalls anwesender Reste von unumgesetztem Alkenylalkoxisilan beschränken kann. Diese haben zwar keine nachteilige Wirkung auf die Eignung der Produkte als Haftvermittler, setzen aber wegen ihrer Flüchtigkeit den Flammpunkt derselben deutlich herab, wodurch einer der Vorteile der erfindungsgemäßen Produkte vermindert wird.

Die Anlagerungsreaktion zwischen den 1,3-Dien-Homo- oder Copolymeren und den ungesättigten Siliciumverbindungen der allgemeinen Formel I wird im allgemeinen durch Erhitzen der Reaktanten auf Temperaturen von 190 bis 300 °C, vorzugsweise von 200 bis 260 °C, unter Inertgas durchführt. Das ungesättigte Silan wird dabei im allgemeinen bis zu einem dreifachen molaren Überschuß, bezogen auf eine konjugierte Dienstruktur des 1,3-Dien-Homo- oder Copolymeren, eingesetzt. Die Reaktionszeiten betragen je nach gewählter Reaktionstemperatur zwischen 1 und 12 Stunden, vorzugsweise zwischen 3 und 6 Stunden.

Für die Anlagerung ist erhöhter Druck nur insofern erforderlich, als der Dampfdruck des angelagerten ungesättigten Silans bei der gewählten Reaktionstemperatur > 1 bar beträgt. Da man bei der Herstellung der niedermolekularen 1,3-Dien-Homo- und Copolymeren ohnehin unter leichtem Überdruck arbeitet und zweckmäßigerweise sowohl die Isomerisierung als auch die nachfolgende Silanaddition im gleichen Reaktionsgefäß durchführt, würde der apparative Aufwand bei einer unter Druck betriebenen Anlagerung im allgemeinen nicht erhöht werden.

Die besonders niedrige Viskosität der einsetzbaren 1,3-Dien-Homo- und Copolymeren erleichtert sowohl die Durch-

führung der Anlagerungsreaktion, da diese dadurch im allgemeinen ohne Zusatz eines sonst erforderlichen Lösemittels durchgeführt werden kann, als auch die Aufarbeitung und die Handhabung der Anlagerungsprodukte. Die Arbeitsweise bei der Herstellung wird dadurch außerdem nicht nur wirtschaftlicher, sondern auch umweltfreundlicher, da Lösemittel weder verbraucht noch später an Abwasser oder Atmosphäre abgegeben werden müssen.

Die Aufarbeitung der reaktive Silylgruppen tragenden Homo- oder Copolymeren von 1,3-Dienen erfolgt - sofern überhaupt erforderlich - durch Abziehen von nicht umgesetztem Silan im Vakuum.

Der gewünschte Gehalt an gebundenem Silicium von 0,4 bis 12 Gewichtsprozent bzw. die angelagerte Menge an ungesättigtem Silan und damit die Anzahl der im Anlagerungsprodukt durchschnittlich vorhandenen reaktiven Silylgruppen läßt sich über den Isomerisierungsgrad und die Menge des angebotenen Silans einstellen. Er richtet sich in erster Linie nach dem speziellen Verwendungszweck des Anlagerungsproduktes. So steigert eine Erhöhung des Gehaltes an reaktiven Silylgruppen die Reaktivität der Anlagerungsprodukte und ihre Neigung zur Ausbildung eines Netzwerkes von höherer Vernetzungsdichte durch Polykondensation der nach Hydrolyse entstandenen Silanolgruppen. Diese Eigenschaften können beispielsweise bei einer Reihe von Anwendungen der erfindungsgemäßen reaktive Silylgruppen tragende Homo- oder Copolymeren von 1,3-Dienen, z. B. auf dem Gebiet der Klebstoffe, Isolier- und Dichtungsmassen, wertvoll sein.

In erster Linie finden die erfindungsgemäßen Anlagerungsverbindungen jedoch Verwendung als Haftvermittler bei der Herstellung von Mischungen aus Polymeren, vorzugsweise Kautschuken, mineralischen Füllstoffen und gegebenenfalls weiteren Zusatzstoffen. Sie können dabei sowohl vor der

BAD ORIGINAL

Herstellung der Mischung in Substanz oder Lösung auf den mineralischen Füllstoff aufgebracht als auch während der Herstellung der Mischung dieser zugegeben werden.

Als mineralische Füllstoffe eignen sich beispielsweise Kieselsäuren ($SiO_2$) und Silicate (wie Kaolin, Talkum, Asbest, Glimmer, Glasfasern, Glaskugeln, synthetische Ca-, Mg- und Al-Silicate, Portland-Zement, Hochofenschlacke), Aluminiumhydroxid und -oxid (hydrat)e, Eisen(hydr)oxid(e).

Verwendbare Kautschuke sind alle üblichen, durch Peroxide bzw. Schwefel vulkanisierbaren Typen, wie beispielsweise Naturkautschuk, synth. Polyisopren, Polybutadien, Styrol-Butadien-Copolymere, Polyalkenamere (wie Polypentenamere, Polyoctenamere oder Polydodecenamere) Ethylen-Propylen-Copolymere (EPM), Isobutylen-Isopren-Copolymere (Butylkautschuk), Butadien-Acrylnitril-Copolymere.

Außerdem sind auch andere Polymere - wie z. B. Polyethylen, Polypropylen, Polybutylen, Polyvinylchlorid, Ethylen-Vinylacetat-Copolymere, Polystyrol - gegebenenfalls unter Zusatz von Radikalbildnern, wie Dicumylperoxid, mit Hilfe der erfindungsgemäßen polymeren Haftvermittler vernetzbar und/oder durch mineralische Füllstoffe verstärkbar.

Unter Zusatzstoffen, die den Mischungen aus Polymeren, vorzugsweise Kautschuken, mineralischem Füllstoff und erfindungsgemäßem Haftvermittler gegebenenfalls zugesetzt werden können, werden vor allem Vulkanisationsagenzien und Weichmacher verstanden.

Als Vulkanisationsagenzien kommen in erster Linie Schwefel in Kombination mit den bekannten Vulkanisationsbeschleunigern unter Zusatz von Zinkoxid und höheren Fettsäuren, wie z. B. Stearinsäure, infrage. Mit gleichem Erfolg sind auch Peroxide oder spezielle Schwefelspender, wie z. B. N,N'-Morpholindisulfid oder spezielle Thiurame zur Vernetzung möglich.

Als Weichmacher sind die bekannten Raffinerieprodukte zu nennen. Dabei können Öle mit vorwiegend aromatischen, naphthenischen oder paraffinischen Bestandteilen Verwendung finden. Des weiteren können selbstverständlich alle bekannten Alterungsschutzmittel beigefügt werden.

Die erfindungsgemäßen Produkte eignen sich ferner als Zusätze zur Verbesserung der Eigenschaften von Klebstoffen, Kitten, Dichtungs- und Spachtelmassen, als Mittel zur Dispergierung von Pigmenten, Hydrophobierung von Substraten wie Papier, Textilien, Holz, Karton und Baustoffen sowie zur Bodenverfestigung.

Alle Prozentangaben - auch in den nachfolgenden Beispielen, die die vorliegende Erfindung erläutern - sind, sofern nicht anders angegeben, Gewichtsprozente.

Als Test auf den Einbau des analytisch gefundenen Siliciums in das Polybutadienöl wird die Vernetzbarkeit durch Wasser bestimmt. Dazu werden jeweils 2,0 g des Produktes in 40 ml Hexan gelöst, 1,0 ml einer 5 %igen Lösung von Dibutylzinndilaurat in Hexan zugesetzt und die Lösung auf Wasser in einer Schale (Oberfläche 600 $cm^2$) gegossen. Nach 24stündigem Stehen bei Raumtemperatur hat sich ein fester Polymerfilm gebildet, dessen bei Raumtemperatur (25 °C) in Toluol unlösliche Anteile nach vorhergehendem Trocknen bestimmt werden.

I Herstellung der erfindungsgemäßen Produkte

Beispiel 1

200 g eines Polybutadienöls ($\bar{M}n$ 1 500; cis-1,4-Gehalt = 72 %, Vinylgehalt < 1 %), die nach der Isomerisierung einen Anteil von 21 % konjugierten Diolefinen aufwiesen, wurden im Autoklaven unter Stickstoffatmosphäre zusammen mit 947 mMol (≙ 180 g) Vinyltriethoxisilan 4 Stunden bei 250 °C gehalten. Während dieser Zeit wurde das Gemisch

gerührt. Die Silanmenge entsprach einem 2,4fachen Überschuß, bezogen auf konjugierte Dienstrukturen. Es resultierte nach anschließender einstündiger Vakuumbehandlung bei 130 °C ein Öl, das mit einem Si-Gehalt von 3,6 % zu 90 % funktionalisiert war, d. h. 90 % der Konjuenstrukturen wurden für die Anlagerung des Silans ausgenutzt. Der Vernetzungstest ergab 89 % unlösliche Anteile. Die gaschromatographisch ermittelten Gehalte an Vinylsilan lagen hier wie auch bei den folgenden Beispielen < 0,1 %.

Beispiele 2 bis 9 und Vergleichsbeispiel A

Jeweils 200 g des im Beispiel 1 als Ausgangsprodukt dienenden Polybutadienöls wurden bei den in der nachfolgenden Tabelle aufgeführten Bedingungen unter Stickstoffatmosphäre funktionalisiert. Die analytischen Daten der Anlagerungsprodukte sind ebenfalls der Tabelle 1 zu entnehmen.

Tabelle 1

| Bsp. bzw. Vgl.-Bsp. | Konjuengehalt (%) | Vinylsilan Art | Vinylsilan Menge (mMol) | Molares Verhältnis von Vinylsilan zu Konjuengehalt | Reaktionstemp. (°C) | Reaktionszeit (h) | Si-Gehalt im Polymeren (%) | Funktionalisierung (%) |
|---|---|---|---|---|---|---|---|---|
| A | 14,6 | $CH_2$=CH-$SiCl_3$ | 315,6 | 0,9 | 150 | 12 | 0,07 | 2 |
| 2 | 14,6 | $CH_2$=CH-$SiCl_3$ | 315,6 | 0,9 | 190 | 12 | 0,44 | 12,5 |
| 3 a) | 21,0 | $CH_2$=CH-$SiCl_3$ | 315,6 | 0,8 | 250 | 3 | 1,45 | 41 |
| 4 | 21,0 | $CH_2$=CH-$SiCl_3$ | 315,6 | 0,8 | 225 | 12 | 1,4 | 40 |
| 5 | 21,0 | $CH_2$=CH-Si$(OEt)_3$ | 315,6 | 0,8 | 250 | 3 | 1,25 | 37 |
| 6 | 21,0 | $CH_2$=CH-Si$(OEt)_3$ | 631,2 | 1,6 | 250 | 4 | 2,05 | 51 |
| 7 | 18,7 | $CH_2$=CH-Si$(OEt)_3$ | 631,2 | 1,8 | 250 | 5 | 3,4 | 93 |
| 8 | 18,7 | $CH_2$=CH-Si$(OEt)_3$ | 473,4 | 1,4 | 250 | 5 | 2,05 | 56 |
| 9 b) | 18,7 | $CH_2$=CH-Si$(OEt)_3$ | 631,2 | 1,8 | 250 | 6 | 3,7 | 100 |

a) Die Viskosität des Anlagerungsproduktes betrug 1 760 mPa s, des Ausgangsöls 1 230 mPa s. Vernetzungstest: 77 % unlösliche Anteile.

b) Die Viskosität des Anlagerungsproduktes betrug 1 570 mPa s, des Ausgangsöls 1 250 mPa s. Vernetzungstest: 91 % unlösliche Anteile.

II Anwendung der erfindungsgemäßen Produkte als Haftvermittler

Beispiel 10

Auf der Walze werden folgende Mischungen auf Basis von ungesättigtem Ethylen-Propylen-Kautschuk (EPDM) mit Ethyliden-norbornen als Terkomponente hergestellt:

Tabelle 2

| | Mischungs-Nr. 1 | 2 | 3 |
|---|---|---|---|
| | Gewichtsteile | | |
| EPDM | | | |
| statistischer Typ | | | |
| ML 1+4 (100 °C) = 70 | 100,0 | 100,0 | 100,0 |
| Zinkoxid | 5,0 | 5,0 | 5,0 |
| Stearinsäure | 2,0 | 2,0 | 2,0 |
| Kieselerde | 120,0 | 120,0 | 120,0 |
| naphth. Mineralölweichmacher | 25,0 | 25,0 | 25,0 |
| Produkt nach Beispiel 1 | - | 2,0 | - |
| Produkt nach Beispiel 7 | - | - | 2,0 |
| Benzothiazyl-2-cyclohexylsulfenamid | 2,0 | 2,0 | 2,0 |
| Tetramethylthiuramdisulfid | 1,0 | 1,0 | 1,0 |
| Schwefel | 1,5 | 1,5 | 1,5 |

Der Vulkanisationsverlauf dieser Mischungen wird mittels eines Zwick-Schwingelastometers bei 160 °C und einer Verformungsamplitude von 1 ° und 3 Schwingungen pro Minute bestimmt. Es werden folgende Meßergebnisse erhalten:

Tabelle 3

| | Mischungs-Nr. | | |
|---|---|---|---|
| | 1 | 2 | 3 |
| Zeit bis Vernetzungsumsatz von | | | |
| 10 %, $t_{10}$ (min) | 3,8 | 4,0 | 4,0 |
| 90 %, $t_{90}$ (min) | 19,7 | 10,6 | 11,7 |

Die Anvulkanisationszeit $t_{10}$ wird von den erfindungsgemäßen polymeren Siliciumverbindungen nur geringfügig beeinflußt. Die Ausvulkanisationszeit $t_{90}$ wird dagegen fast auf die Hälfte reduziert.

Die in der Presse 20 Minuten bei 160 °C vulkanisierten 4 mm-Prüfkörper werden folgenden Prüfungen unterzogen:

| Prüfung | | Norm |
|---|---|---|
| Zugfestigkeit | (MPa) | DIN 53 504 |
| Reißdehnung | (%) | DIN 53 504 |
| Spannungswert | (MPa) | DIN 53 504 |
| bleibende Dehnung | (%) | interne Methode (Messung nach 1 Minute) |
| Weiterreißwiderstand nach Pohle | (N/mm) | interne Methode (Ringprobe) |
| Härte | (Shore A) | DIN 50 505 |
| Druckverformungsrest | (%) | DIN 53 517 |

In der Tabelle 4 werden die Prüfergebnisse gegenübergestellt:

Tabelle 4

| | Vulkanisat-Nr. | | |
|---|---|---|---|
| | 1 | 2 | 3 |
| Zugfestigkeit | 3,8 | 6,2 | 6,5 |
| Reißdehnung | 426 | 378 | 365 |
| Spannungswert bei 300 % Dehn. | 2,6 | 5,5 | 5,2 |
| bleibende Dehnung | 25 | 16 | 15 |
| Weiterreißwiderstand | 8 | 12 | 12 |
| Härte | 63 | 67 | 66 |
| Druckverformungsrest 22 h bei 70 °C | 27 | 12 | 11 |

Die erfindungsgemäßen polymeren Siliciumverbindungen bewirken in schwefelvulkanisierten EPDM-Mischungen eine ausgeprägte Erhöhung der Vernetzungsdichte, die sich vor allem durch das starke Ansteigen des Spannungswertes und der Verringerung der bleibenden Dehnung sowie des Druckverformungsrestes äußert. Außerdem wird die Zugfestigkeit und der Weiterreißwiderstand deutlich erhöht.

Beispiel 11

Im Innenmischer werden folgende Mischungen auf Basis von Styrol-Butadien-Kautschuk (SBR) hergestellt:

Tabelle 5

| | Mischungs-Nr. 4 | 5 |
|---|---|---|
| | Gewichtsteile | |
| SBR 1502 | 100,0 | 100,0 |
| Zinkoxid | 4,0 | 4,0 |
| Stearinsäure | 2,0 | 2,0 |
| hochdisperse, gefällte Kieselsäure | 50,0 | 50,0 |
| naphth. Mineralölweichmacher | 5,0 | 5,0 |
| Polywachs mit Molekulargewicht 4 000 | 2,0 | 2,0 |
| Produkt nach Beispiel 4 | - | 2,0 |
| Benzothiazyl-2-cyclohexylsulfenamid | 1,5 | 1,5 |
| Tetramethylthiuramdisulfid | 0,5 | 0,5 |
| Schwefel | 2,0 | 2,0 |

Die in der Presse 20 Minuten bei 150 °C vulkanisierten 4 mm-Prüfkörper werden entsprechend Beispiel 10 untersucht. In der Tabelle 6 werden die Prüfergebnisse gegenübergestellt:

Tabelle 6

| | Vulkanisat-Nr. 4 | 5 |
|---|---|---|
| Zugfestigkeit | 7,6 | 9,0 |
| Reißdehnung | 519 | 442 |
| Spannungswert bei 300 % Dehn. | 2,7 | 4,8 |
| bleibende Dehnung | 14 | 8 |
| Weiterreißwiderstand | 19 | 22 |
| Härte | 62 | 65 |

Bei Verwendung des erfindungsgemäßen Haftvermittlers wird gegenüber dem Vergleichsversuch ohne das erfindungsgemäße Produkt die Vernetzungsdichte deutlich erhöht. Die mechanischen Eigenschaften der Vulkanisate werden verbessert.

Patentansprüche:

1. Reaktive Silylgruppen tragende Homo- oder Copolymere von 1,3-Dienen, dadurch gekennzeichnet, daß sie
   a) 0,4 bis 12 Gewichtsprozent gebundenes Silicium enthalten und
   b) durch Umsetzung eines mehr als 1 % seiner aliphatischen Doppelbindungen in Konjugation enthaltenden 1,3-Dien-Homo- oder Copolymeren vom Molekulargewicht ($\bar{M}n$) 400 bis 6 000 mit einer Siliciumverbindung der allgemeinen Formel I

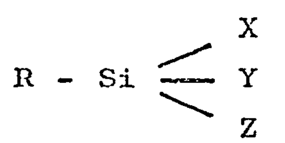
,

in der R ein ungesättigter aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 190 bis 300 °C erhalten werden.

2. Verfahren zur Herstellung von reaktive Silylgruppen tragende Homo- oder Copolymeren von 1,3-Dienen mit 0,4 bis 12 Gewichtsprozent gebundenem Silicium, dadurch gekennzeichnet, daß man ein 1,3-Dien-Homo- oder Copolymeres vom Moleku-

largewicht ($\bar{M}_n$) 400 bis 6 000, das mehr als 1 % der aliphatischen Doppelbindungen in Konjugation enthält, mit einer Siliciumverbindung der allgemeinen Formel I

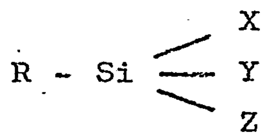
,

in der R ein ungesättigter aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 190 bis 300 °C umsetzt.

3. Verfahren nach Anspruch 2,
dadurch gekennzeichnet,
daß man die Umsetzung bei einer Temperatur von 200 bis 260 °C durchführt.

4. Verwendung der reaktive Silylgruppen tragenden 1,3-Dien-Homo- oder Copolymeren gemäß den Ansprüchen 1 bis 3 als Haftvermittler bei der Herstellung von Mischungen aus Polymeren, mineralischen Füllstoffen und gegebenenfalls weiteren Zusatzstoffen.

5. Verwendung der reaktive Silylgruppen tragenden 1,3-Dien-Homo- oder Copolymeren nach Anspruch 4,
dadurch gekennzeichnet,
daß man als Polymere natürliche und/oder synthetische Kautschuke einsetzt.